# EUROPEAN PATENT SPECIFICATION

(11) **EP 3 058 149 B1**
(45) Date of publication and mention of the grant of the patent: **04.11.2026**
(21) Application number: 14850741.1
(22) Date of filing: 02.10.2014
(51) Int. Cl.: E04B 2/10, E04B 2/18, E04B 2/02

(54) **METHOD AND SYSTEM OF ALIGNING A PLURALITIY OF CONCRETE MASONRY UNITS WITH A SPACER SYSTEM**
VERFAHREN UND SYSTEM ZUM AUSRICHTEN EINER VIELZAHL VON BETONSTEINEN MIT EINEM ABSTANDHALTERSYSTEM
PROCÉDÉ ET SYSTÈME D'ALIGNEMENT D'UNE PLURALITÉ D'ÉLÉMENTS DE MAÇONNERIE EN BÉTON À L'AIDE D'UN SYSTÈME D'ESPACEMENT

(30) Priority: 02.10.2013 US 201314044342
(43) Date of publication of application: 24.08.2016
(73) Proprietor: Jones, Jonathan E., Tifton, GA 31794 (US)
(72) Inventor: Jones, Jonathan E., Tifton, GA 31794 (US)
(74) Representative: Moore, David Simon
(86) International application number: PCT/US2014/058867
(87) International publication number: WO 2015/051147

(56) References cited:
- EP-A1- 1 036 638
- CA-A1- 2 245 149
- US-A- 2 641 921
- US-A- 3 209 510
- US-A- 3 529 390
- US-A- 5 056 289
- US-A- 5 224 314
- US-A- 5 288 534
- US-A- 5 623 799
- US-A- 5 907 937
- US-A1- 2007 245 660

## Description

### 1. Technical Field.

This invention relates to a system and method of aligning concrete blocks in construction. More specifically, the invention comprises a system of utilizing spacers and modified concrete masonry units to construct a correctly aligned structure.

### 2. Background Art.

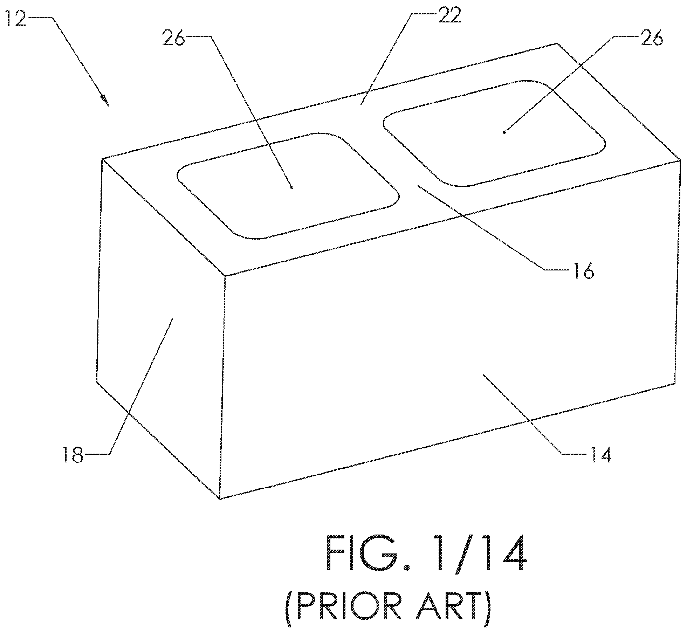

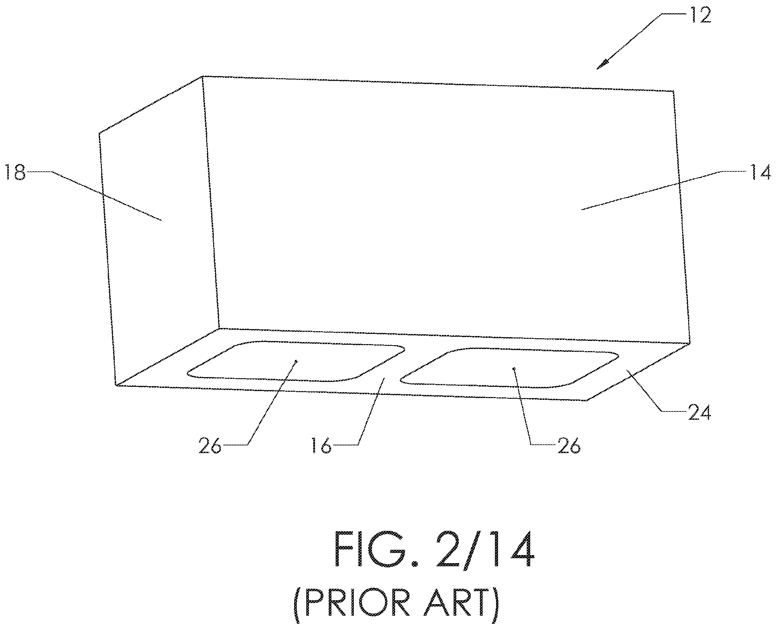

The construction of a building or the assembly of infrastructure requires a variety of materials. A concrete masonry unit ("CMU"), or concrete block, is an extremely common large rectangular brick used in construction. Strong, durable walls can be produced using concrete blocks. Concrete masonry units 12 are typically produced with hollow centers, or cores, and six sides, as illustrated in Figure 1. Cores 26 pass through the concrete masonry unit 1.2, from the top side 22 to the bottom side 26 (as shown in Figure 2). The cores can provide continuous vertical voids that are often reinforced. Steel bars can be placed in the cores with grout installed surrounding the bars. The top side 22 and bottom side 24 include a length and a width and typically include a medial edge which extends between the two cores. The sides 14 connect the first end 18 to the second end 18.

There are three primary components which make up the structural system of a concrete block wall including the blocks and the mortar that holds them together, the reinforcement, and the grout, which is used to fill in the cores in the concrete block. When constructing a concrete wall, it is extremely important that the concrete blocks are plumb and level. Thus, setting the blocks in the mortar requires precision.

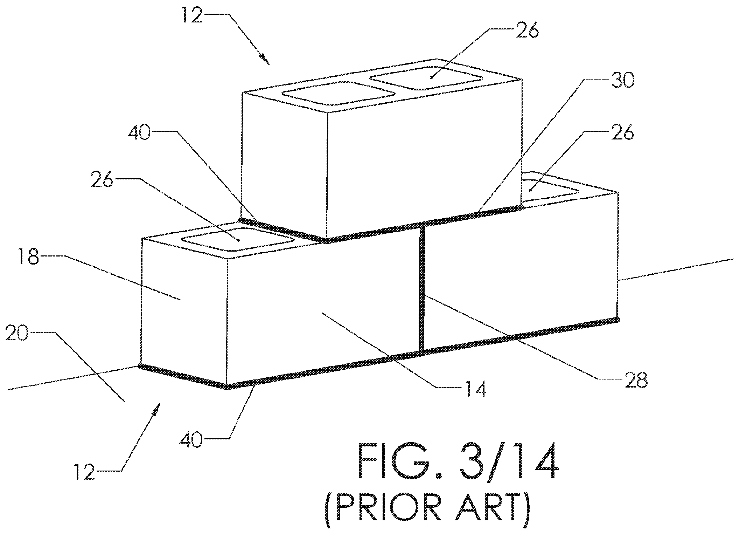

Figure 3 illustrates a prior art concrete wall construction consisting of a few concrete blocks. The reader will appreciate that the wall would, in reality, consist of numerous concrete blocks. In order to construct the prior art wall the builder spreads a layer of mortar on a solid, level surface and proceeds to lay the first row of concrete blocks prior to laying the additional rows. The horizontal joints between the units are called bed joints while the vertical joints are called head joints. The additional layers of blocks are typically oriented such that the mid-section (or medial edge) of the concrete block sits over the head joint of the lower blocks. This type of construction is referred to as "running bond construction." However, various bond or joint patterns can be created. In any pattern created, each block must be plumb and level while remaining a set distance from one another. The builder must align the blocks efficiently, so that the mortar does not dry before the blocks are properly aligned.

Examples of prior block wall constructions are shown in D1 (US Patent No.3,529,390 (Stetter Grant) and D2 (US Patent Publication No. US 2007/0245660 A1 Scott, Robert), ), which both disclose wall structures formed of concrete blocks, the blocks having
a first side and a second side connected to a first end and a second end;
a top side and a bottom side having a length and a width;
a plurality of grooves on said top side and said bottom side wherein at least two of said plurality of grooves are cut parallel to one another along said length of said top side and said length of said bottom side; providing a plurality of spacers and inserting said plurality of spacers into said grooves to provide for a set distance from a second concrete block; and stacking said concrete blocks such that said spacers provide a set distance between said concrete blocks..
Ensuring that each block is plumb and level can be very tedious. Additionally, mortar joints often require specific measurements or spacing. A misalignment can cause cracking or other structural weakness. Repeated measurements and adjustments are common in prior art systems. Several systems have been implemented to simplify the process. However, no prior art system provides an efficient and effective manner for aligning the blocks both vertically and horizontally such that the blocks are plumb, level and adequately spaced apart. The present system achieves this objective.

### SUMMARY OF INVENTION

According to the present invention there is provided a method and system of aligning a plurality of concrete masonry units when constructing a concrete structure on a surface using a substance to adhere said concrete masonry units together, said method comprising the steps of:
a. providing said plurality of concrete masonry units having:
   (i) a first side and a second side connected to a first end and a second end;
   (ii) a top side and a bottom side having a length and a width;
   (iii) a plurality of grooves on said top side and said bottom side wherein at least two of said plurality of grooves are cut parallel to one another along said length of said top side and said length of said bottom side;
b. providing a plurality of spacers having a planar member, at least one horizontal finger and at least one vertical finger extending upwards from said horizontal finger;
c. placing said plurality of concrete masonry units on said surface;
d. inserting said planar member of said plurality of spacers into said groove such that said finger provides for a set distance from a second concrete masonry unit ; and
e. stacking said concrete masonry units such that said spacers provide a set distance between said concrete masonry units,
   wherein each spacer has a planar surface provided on a surface parallel to the planar member and in that said at least one horizontal finger and said at least one vertical finger divide the planar member into sections, wherein said at least one horizontal finger provides spacing in a bed joint, while said at least one vertical finger provides spacing in a head joint, wherein said planar member of said spacers is set into said plurality of grooves such that said planar member comes in contact with said concrete masonry unit within said groove, to enable a plurality of said concrete masonry units (34) to be assembled into a structure with the units spaced a predetermined distance apart in both the vertical and horizontal directions. At least one of said plurality of spacers further comprises a horizontal finger and a vertical finger, wherein said horizontal finger extends through the middle of said planar member only on one side thereof and said vertical finger extends upward from said horizontal finger, wherein said planar member is divided into three planar portions.

The present invention comprises a method for aligning concrete masonry units for a concrete structure. In the present method a plurality of concrete masonry units are provided. Each concrete masonry unit includes six sides, including a top and a bottom and preferably two cores or vertical voids therein. The top and bottom of the concrete masonry unit each include two lateral grooves along the length of the block. The lateral grooves are designed to accept the spacers provided in the present method. Spacers consist of a planar member and at least one finger. Planar member is inserted into the lateral groove of a concrete masonry unit for use. Once inserted the fingers of the spacer sit within a joint between the concrete masonry units.

In the preferred embodiment spacers are oriented at the intersection of two joints and at consistent intervals between the joint intersections so as to maintain an adequate space within the joint and to maintain the concrete masonry unit in a square orientation.

### BRIEF DESCRIPTION OF DRAWINGS

FIG. 1 is a perspective view, showing a prior art concrete masonry unit.
FIG. 2 is a perspective view, showing a prior art concrete masonry unit.
FIG. 3 is a perspective view, showing a prior art wall construction of concrete masonry units, mortar and reinforcement.

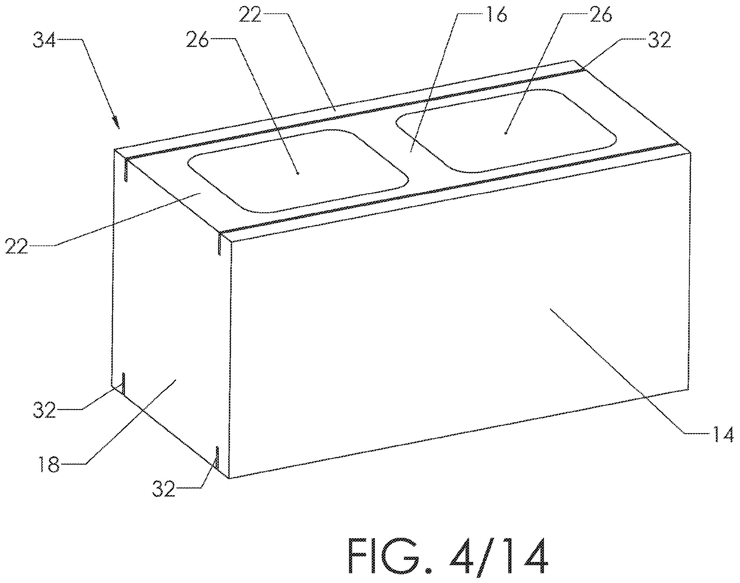

FIG. 4 is a perspective view, showing a concrete masonry unit in the present method including lateral grooves along the top outer edge (top side).
FIG. 5 is a perspective view, showing a spacer provided in the present method.
FIG. 6 is a perspective view, showing a spacer provided in the present method.
FIG. 7 is a perspective view, showing a spacer provided in the present method.
FIG. 8 is a perspective view, showing a spacer provided in the present method.
FIG. 9 is a perspective view, showing a spacer provided in the present method.
FIG. 10 is an exploded perspective view, showing the step of inserting the spacers into the lateral grooves of the concrete masonry units.
FIG. 11 is an exploded perspective view, showing the spacer inserted fully into the lateral grooves of the concrete masonry unit.
FIG. 12 is a perspective view, showing a spacer inserted into a concrete masonry unit in the present method.
FIG. 13 is a perspective view, showing concrete masonry units stacked on a level surface using the present method.
FIG. 14 is a perspective view, showing a concrete masonry unit wall construction using the present method.

### REFERENCE NUMERALS IN THE DRAWINGS

| | | | |
|---|---|---|---|
| 10 | concrete masonry unit spacer system | 12 | concrete masonry unit |
| 14 | sides | 16 | medial edge |
| 18 | ends | 20 | surface |
| 22 | top side | 24 | bottom side |
| 26 | cores | 28 | head joint |
| 30 | bed joints | 32 | grooves |
| 34 | modified CMU | 36 | spacers |
| 38 | horizontal finger | 40 | mortar |
| 42 | vertical finger | 44 | planar member |

### DESCRIPTION OF EMBODIMENTS

The present method of aligning concrete masonry units in the construction of a structure improves on the prior art methods of building concrete walls, as illustrated in Figures 1-3, shown and described above. As is known in the prior art and illustrated in Figure 1 and 2, a concrete masonry unit 12 generally consists of rectangular blocks having two central cores 26 (voids) and six sides (or walls), including top and a bottom. Concrete masonry units and concrete blocks are referred to synonymously throughout this description.

Figure 3 illustrates a prior art constructed wall. The builder aligns concrete masoriry units 12 on a solid, level surface 20 which includes a layer of mortar 40. Each row of concrete blocks 12 must be level plumb and accurately spaced apart. Cores 26 are preferably aligned such that reinforcement (e.g. steel bars and grout) can be provided through several blocks 12. The joints between the concrete blocks 12 include mortar 40. The vertical joints are commonly referred to as head joints 28 while the horizontal joints are called bed joints 30. The concrete blocks 12 are oriented such that the head joints 28 meet the mid-section of the concrete block above the respective head joint 28. This particular bond or joint pattern is referred to in the industry as a "running bond construction". The reader will appreciate that although a "running bond construction" pattern is shown, the present method can be used in constructing any known bond or joint pattern. Some examples of concrete masonry patterns in the industry include a running bond, horizontal stack, vertical stack, diagonal basket weave, diagonal bond, basket weave and coursed ashlar.

The present method provides a plurality of modified concrete masonry unit. Modified concrete masonry unit 34, or modified concrete block, includes two lateral grooves 32 along top 22 and two lateral grooves 32 along bottom 24 of the concrete block 34. Lateral grooves can be pre-manufactured in the modified concrete blocks 34 or cut or scored into the concrete blocks after manufacture. It is important that lateral grooves 32 are appropriately deep so that the spacers 36 fit uniformly into each groove 32.

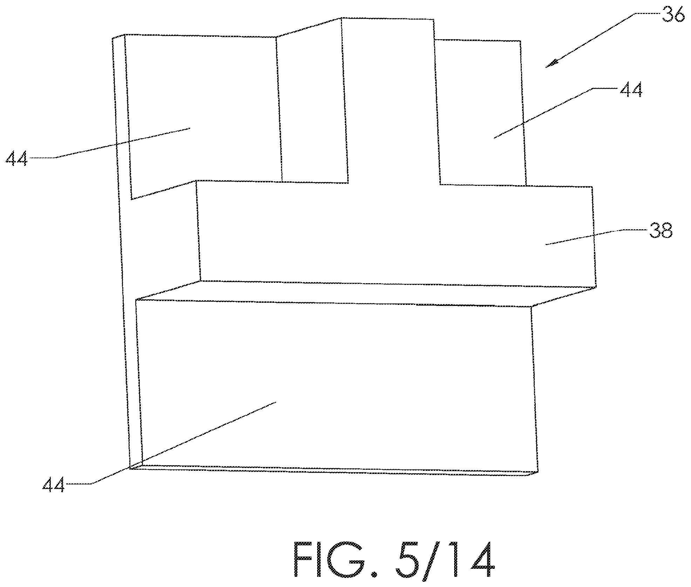

A series of spacers 36 are also provided in the present method and illustrated in Figures 5-9. Spacers 36 generally include planar member 44 and at least one finger member 38, 42. Finger members 38, 42 provide the required spacing by protruding into the gap between two concrete blocks and/or a concrete block and a surface or other object. Planar members 44 fit into lateral grooves 32. Figures 5-9 include a number of different embodiments of spacers 36. Additionally, each and every spacer can be turned or rotated to serve the required purpose of the particular joint being served. Thus, the use of the term "horizontal" and "vertical" with regard to the fingers 38, 42 is merely for purposes of explanation rather than limiting the fingers to a particular orientation.

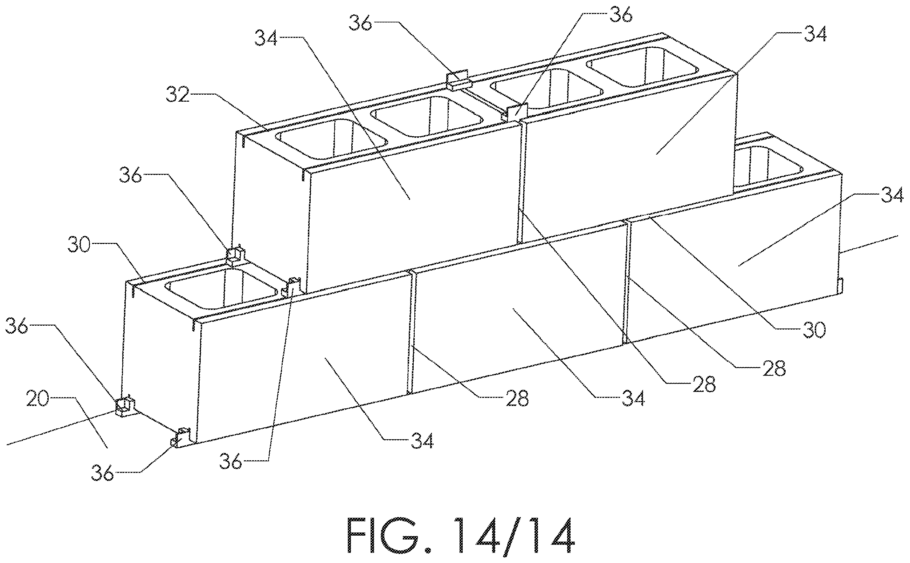

Figure 5 illustrates spacer 36 which includes a horizontal finger 38 extending the full length of planar member 44 and a vertical finger 42 which extends upward from horizontal finger 38 along the upper half of planar member 44. Planar member 44 fits into lateral grooves 32 on three proximate concrete masonry blocks 34, as illustrated in Figure 14, and further described herein, Horizontal finger 38 provides spacing in a bed joint 30, while vertical finger 42 provides spacing in a head joint 28. However, spacer 36 can be rotated such that the fingers are inserted into the opposing joints.

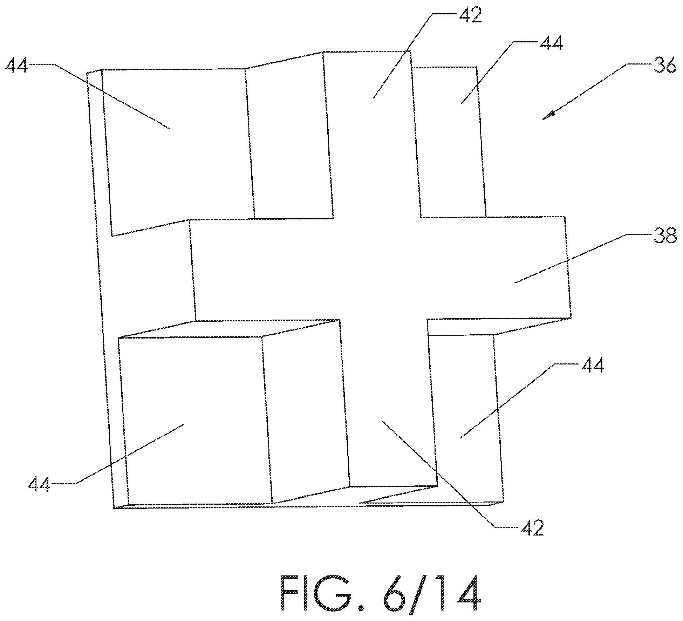

A second spacer 36 is illustrated in Figure 6. Second spacer 36 includes a horizontal finger 38 and vertical finger 42 extending fully across planar member 44 in a perpendicular fashion. Spacer 36 in Figure 6 is used to assist the connection of four concrete blocks. Specifically, planar member 44, divided into four sections by the orientation of fingers 38, 42 fits into the lateral grooves of four proximate concrete blocks. This type of pattern for stacking concrete blocks is known in the industry to be a "horizontal stack".

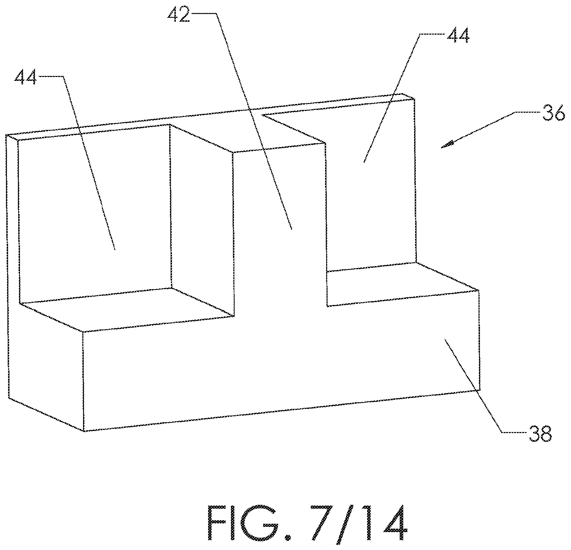

Figure 7 illustrates a third spacer 36 designed to provide spacing on the base of a concrete wall. Horizontal finger 38 extends across the lower portion of planar member 44, while vertical finger 42 extends upward from horizontal finger 38. Planar meinber 44 fits into the lateral grooves of two proximate concrete blocks. Spacer 36 thereby operates to provide a set distance from a level surface, while also creating an appropriately sized gap between the two concrete blocks.

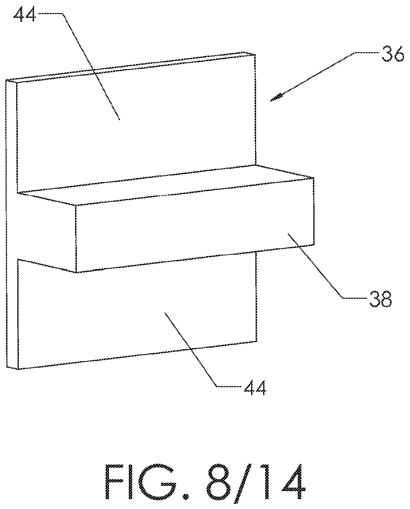

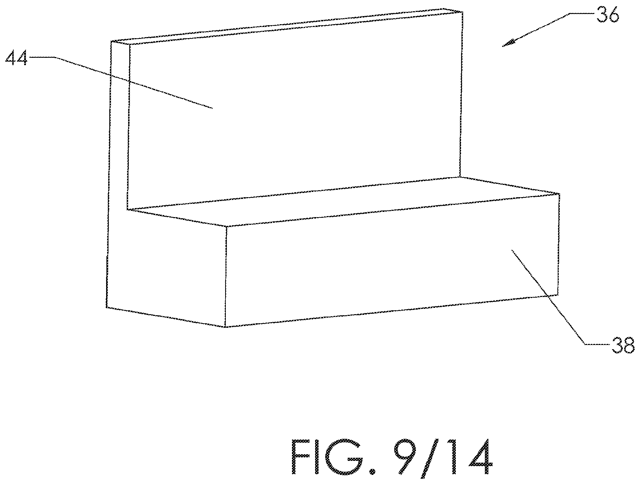

As illustrated in Figure 8, a fourth spacer 36 includes planar member 44 and horizontal finger 38. Planar member 44 in fourth spacer 36 is capable of fitting into lateral grooves 32 of two concrete blocks. Spacer 36 can be particularly beneficial in providing additional support for spacing between two concrete blocks at a bed joint. Figure 9 illustrates a fifth spacer 36 in which planar member 44 fits into the lateral groove of one concrete masonry unit. Horizontal spacer 38 extends across the bottom of planar member 44 and is especially useful in providing a gap on the base of a concrete wall.

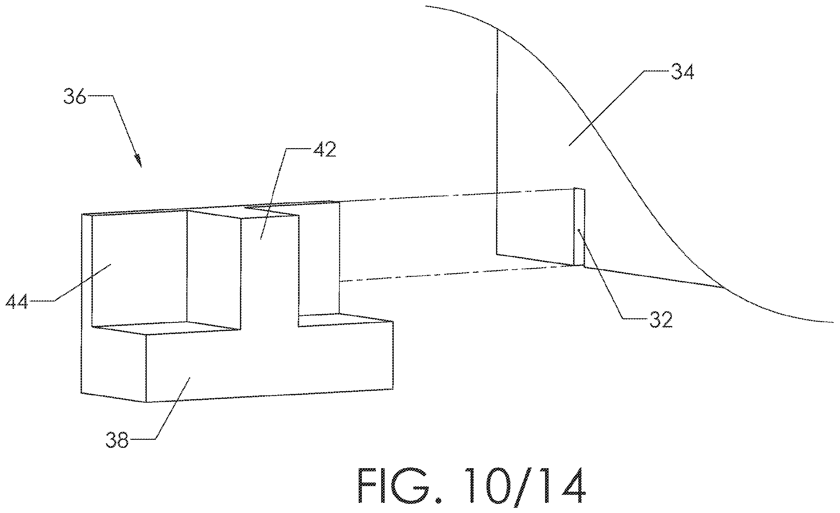

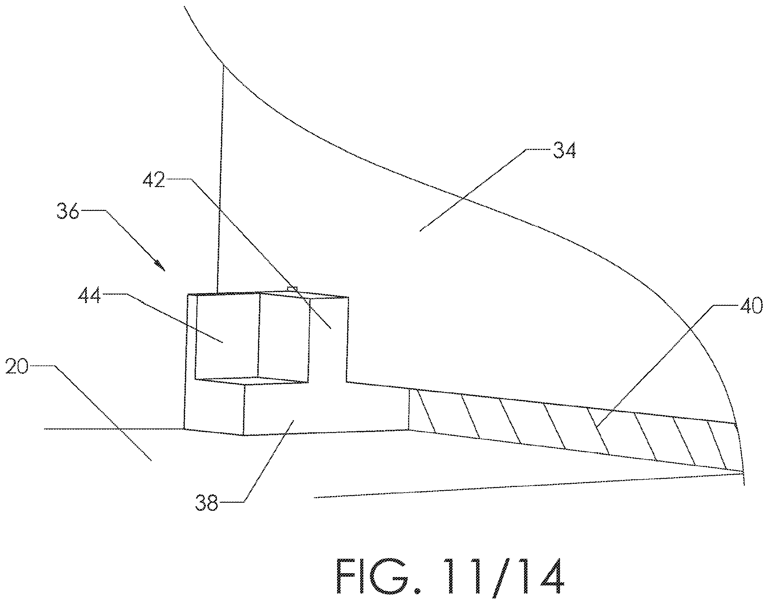

Figure 10 illustrates the step of pressing or sliding spacer 36 into lateral groove 32 on concrete masonry unit 34. The reader will appreciate that any embodiment of spacers 36 is inserted in this manner. A portion of planar member 44 fits into lateral groove 32 such that horizontal finger 38 and vertical finger 42 fit snugly against surface of concrete masonry unit 34. Once spacers 36 are inserted on the lower portion of concrete block 34, as shown in Figure 11, the concrete masonry unit 34 can be placed into the mortar 40. Figure 11 illustrates the utilization of spacer 36 along the base of the first row of concrete masonry units 34. The concrete masonry unit 34 is separated from the surface 20 a particular set distance by horizontal finger 38 of spacer 36. in the preferred method, a series of spacers 36 are utilized to separate concrete masonry blocks 34 from the surface 20 and other concrete blocks.

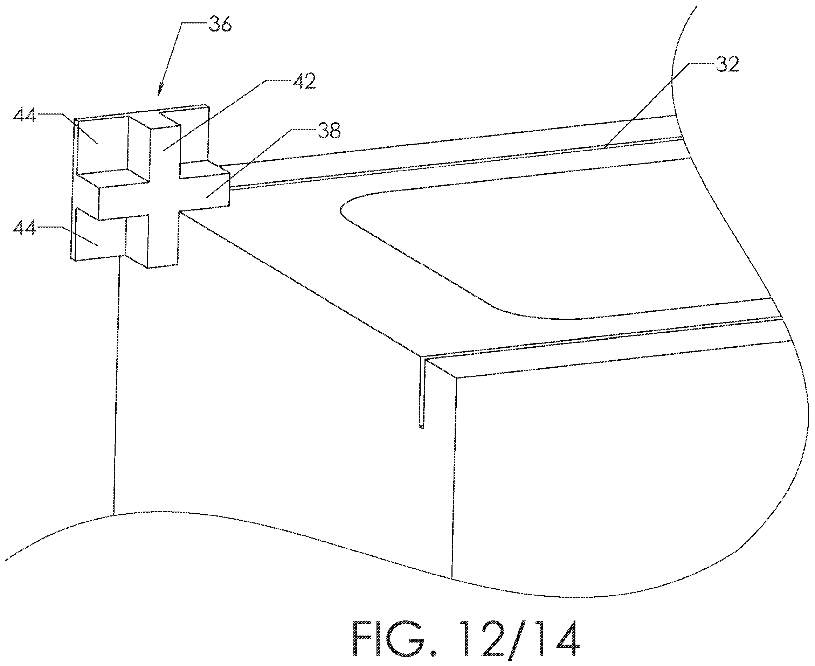

Figure 12 shows spacer 36 having the ability to insert into lateral grooves 32 of four separate proximate concrete blocks 34. The reader will appreciate that the orientation of four proximate concrete masonry blocks 34 would align the bond pattern such that the joints formed a "plus" at each joint. This type of pattern is known in the industry as a "horizontal stack".

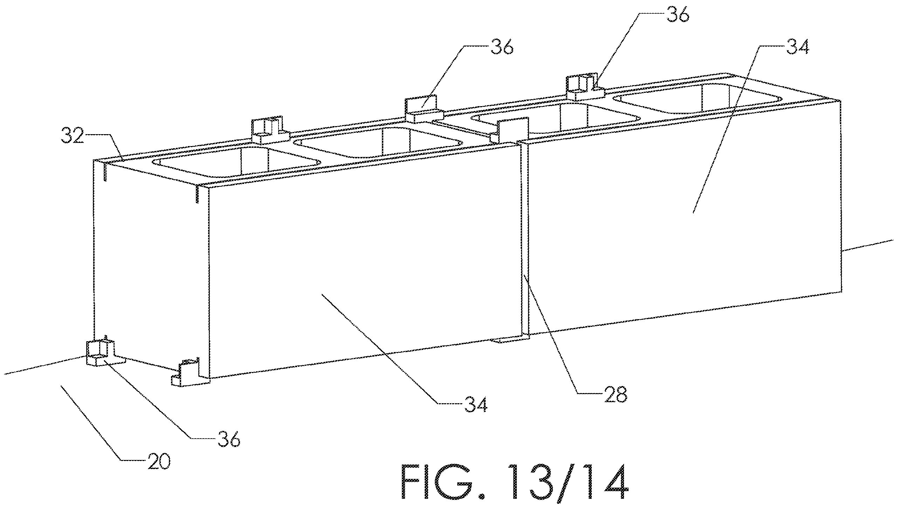

After the spacers 36 are inserted into the lateral grooves 32 of the concrete masonry blocks 34 at the desired intervals, the builder will set the concrete blocks 34, including spacers 36 on a level surface 20 lined with mortar 40, as shown in Figure 13. Spacers 36 are next inserted on the top side 24 of concrete masonry units 34 at the desired intervals. As illustrated, it is preferable that the horizontal and vertical fingers of each spacer 36 line up with the relevant joint where a space is required.

A second row of concrete blocks 34 are set on top of the first row, illustrated in Figure 14. Spacers 36 can be inserted into lateral grooves 32 either before or after the placement of the concrete blocks 34. However, it is preferable that the spacers 36 are fully inserted into the lateral grooves 32 prior to applying the mortar 40 or setting the concrete blocks 34 onto the mortar 40. The steps of inserting spacers 36 and laying the concrete blocks 34 is repeated until concrete wall 34 is complete. The spacers 36 act to dramatically reduce the amount of time spent adjusting the concrete blocks 34. As illustrated the builder can work quickly and efficiently by applying the spacers 36 at the appropriate joints and intervals. As the wall is built the builder will still make the requisite measurements, however spacers 36 will act to maintain the appropriate distance required at the relevant joint. Additionally, the concrete blocks 34 will remain level and plumb if the spacers are applied correctly.

The preceding description contains significant detail regarding the novel aspects of the present invention. It should not be construed, however, as limiting the scope of the invention but rather as providing illustrations of the preferred embodiments of the invention. As an example, although the illustrated embodiments show a series of spacers, any spacer could be designed which includes a planar member and at least one finger portion. Thus, the scope of the invention should be fixed by the following claims, rather than by the examples given.

## Claims

1. A method and system of aligning a plurality of concrete masonry units (34) when constructing a concrete structure on a surface (20) using a substance to adhere said concrete masonry units together (34), said method comprising the steps of:
a. providing said plurality of concrete masonry units (34) having:
(i) a first side and a second side (14) connected to a first end and a second end (18);
(ii) a top side (22) and a bottom side (24) having a length and a width;
(iii) a plurality of grooves (32) on said top side (22) and said bottom side (24) wherein at least two of said plurality of grooves (32) are cut parallel to one another along said length of said top side and said length of said bottom side;
b. providing a plurality of spacers (36) having a planar member (44), at least one horizontal finger (38) and at least one vertical finger (42) extending upwards from said horizontal finger;
c. placing said plurality of concrete masonry units (34) on said surface (20);
d. inserting said planar member (44) of said plurality of spacers (36) into said groove (32) such that said finger provides for a set distance from a second concrete masonry unit (34); and
e. stacking said concrete masonry units (34) such that said spacers (36) provide a set distance between said concrete masonry units (34), wherein each spacer (36) has a planar surface provided on a surface parallel to the planar member (44) and in that said at least one horizontal finger (38) and said at least one vertical finger (42) divide the planar member (44) into sections, wherein said at least one horizontal figure (38) provides spacing in a bed joint (30), while said at least one vertical finger (42) provides spacing in a head joint (28), and wherein said planar member (44) of said spacers (36) is set into said plurality of grooves (32) such that said planar member (44) comes in contact with said concrete masonry unit (34) within said groove (32), to enable a plurality of said concrete masonry units (34) to be assembled into a structure with the units spaced a predetermined distance apart in both the vertical and horizontal directions,
**characterized in that** at least one of said plurality of spacers (36) further comprises a horizontal finger (38) and a vertical finger (42) wherein said horizontal finger (38) extends through the middle of said planar member (44) only on one side thereof and said vertical finger (42) extends upward from said horizontal finger (38), wherein said planar member (44) is divided into three planar portions.

2. A method and system as recited in claim 1, wherein the grooves (32) are pre-manufactured, cut or scored on said top side (22) and said bottom side (24) of said concrete masonry units (34).

3. A method and system as recited in claim 1 or claim 2, wherein said plurality of grooves (32) extend from said first end (18) to said second end (18) of said concrete masonry units (34).

4. A method and system as recited in claim 1 or claim 2, wherein said plurality of grooves (32) have a uniform depth and a uniform width

5. A method and system as recited in claim 4, wherein said at least one finger of said spacer (36) contacts said concrete masonry unit (34) proximate said groove (32) in order to define said set distance between said plurality of said concrete masonry units (34).

6. A method and system as recited in claim 1 or claim 2, wherein at least one further spacer of said plurality of spacers (36) further comprises a horizontal finger (38) fully extended across a lower end of said planar member (44).

7. A method and system as recited in claim 1 or claim 2, wherein at least one further spacer of said plurality of spacers (36) further comprises a horizontal finger (38) and a vertical finger (42) extending across said planar member (42) such that said planar member (44) is divided into four planar portions.

8. A method and system as recited in claim 1 or claim 2, wherein at least one further spacer of said plurality of spacers (36) further comprises a horizontal finger (38) and a vertical finger (42) wherein said horizontal finger (38) is fully extended across a lower end of said planar member (44) and said vertical finger (42) divides said planar member (44) into two planar portions.

9. A method and system as recited in claim 1 or claim 2, wherein in at least one further spacer of said plurality of spacers said at least one finger is a horizontal finger (38) extending across said planar member (44) such that said planar member (44) is divided into two planar portions.

## Patentansprüche

1. Ein Verfahren und System zum Ausrichten einer Vielzahl von Betonsteinen (34) beim Bau einer Betonkonstruktion auf einer Oberfläche (20) unter Verwendung einer Substanz zur Vermauerung der Betonsteine (34) wobei das Verfahren die folgenden Schritte umfasst:
a. Bereitstellung der Vielzahl von Betonsteinen (34), die folgende Merkmale aufweisen:
(i) eine erste Seite und eine zweite Seite (14), die mit einem ersten Ende und einem zweiten Ende (18) verbunden sind;
(ii) eine Oberseite (22) und eine Unterseite (24) mit einer Länge und einer Breite;
(iii) mehrere Nuten (32) an der Oberseite (22) und der Unterseite (24), wobei mindestens zwei der mehreren Nuten (32) parallel zueinander entlang der Länge der Oberseite und der Länge der Unterseite eingeschnitten sind;
b. Bereitstellung mehrerer Abstandshalter (36) mit einem flächigen Element (44), mindestens einem horizontalen Finger (38) und mindestens einem vertikalen Finger (42), der sich von dem horizontalen Finger weg nach oben erstreckt;
c. Platzierung der Vielzahl von Betonsteinen (34) auf der Oberfläche (20);
d. Einfügen des flächigen Elements (44) der mehreren Abstandshalter (36) in die Nut (32), so dass der Finger einen vorgegebenen Abstand zu einem zweiten Betonstein (34) herstellt; und
e. Aufschichten der Betonsteine (34), so dass die Abstandshalter (36) einen vorgegebenen Abstand zwischen den Betonsteinen (34) herstellen;
wobei jeder Abstandshalter (36) eine flächige Oberfläche hat, die an einer Oberfläche parallel zu dem flächigen Element (44) ausgeführt ist, und auf der der mindestens eine horizontale Finger (38) und der mindestens eine horizontale Finger (42) das flächige Element (44) in Abschnitte unterteilt, wobei der mindestens eine horizontale Finger (38) einen Abstand in einer Lagerfuge (30) herstellt, während der mindestens eine vertikale Finger (42) einen Abstand in einer Stoßfuge (28) herstellt, und wobei das flächige Element (44) des Abstandshalters (36) in die mehreren Nuten (32) eingesetzt wird, so dass das flächige Element (44) innerhalb der Nut (32) mit dem Betonstein (34) in Kontakt kommt, damit die Vielzahl von Betonsteinen (34) zu einer Konstruktion zusammengefügt werden können, bei der die Betonsteine sowohl in vertikaler als auch in horizontaler Richtung in einem vorgegebenen Abstand zueinander gehalten werden,
**dadurch gekennzeichnet, dass**
mindestens einer der mehreren Abstandshalter (36) einen horizontalen Finger (38) und einen vertikalen Finger (42) umfasst, wobei sich der horizontale Finger (38) nur auf einer Seite des flächigen Elements (44) durch dessen Mitte erstreckt und der vertikale Finger (42) sich von dem horizontalen Finger (38) weg nach oben erstreckt, wobei das flächige Element (44) in drei Abschnitte unterteilt wird.

2. Ein Verfahren und System nach Anspruch 1, wobei die Nuten (32) an der Oberseite (22) und der Unterseite (24) der Betonsteine (34) vorgefertigt, eingeschnitten oder eingeritzt sind.

3. Ein Verfahren und System nach Anspruch 1 oder Anspruch 2, wobei sich die mehreren Nuten (32) vom ersten Ende (18) zum zweiten Ende (18) der Betonsteine (34) erstrecken.

4. Ein Verfahren und System nach Anspruch 1 oder Anspruch 2, wobei die mehreren Nuten (32) eine einheitliche Tiefe und einheitliche Breite haben.

5. Ein Verfahren und System nach Anspruch 4, wobei der mindestens eine Finger des Abstandshalters (36) den Betonstein (34) in der Nähe der Nut (32) kontaktiert, um den vorgegebenen Abstand zwischen der Vielzahl von Betonsteinen (34) zu definieren.

6. Ein Verfahren und System nach Anspruch 1 oder Anspruch 2, wobei mindestens ein weiterer Abstandshalter der mehreren Abstandshalter (36) weiter einen horizontalen Finger (38) umfasst, der sich vollständig über ein unteres Ende des flächigen Elements (44) erstreckt.

7. Ein Verfahren und System nach Anspruch 1 oder Anspruch 2, wobei mindestens ein weiterer Abstandshalter der mehreren Abstandshalter (36) weiter einen horizontalen Finger (38) und einen vertikalen Finger (42) umfasst, die sich so über das flächige Element (42) erstrecken, dass das flächige Element (44) in vier flächige Abschnitte unterteilt wird.

8. Ein Verfahren und System nach Anspruch 1 oder Anspruch 2, wobei mindestens ein weiterer Abstandshalter der mehreren Abstandshalter (36) weiter einen horizontalen Finger (38) und einen vertikalen Finger (42) umfasst, wobei sich der horizontale Finger (38) vollständig über ein unteres Ende des flächigen Elements (44) erstreckt und der vertikale Finger (42) das flächige Element (44) in zwei flächige Abschnitte unterteilt.

9. Ein Verfahren und System nach Anspruch 1 oder Anspruch 2, wobei bei mindestens einem weiteren Abstandshalter der mehreren Abstandshalter der mindestens eine Finger ein horizontaler Finger (38) ist, der sich so über das flächige Element (44) erstreckt, dass das flächige Element (44) in zwei flächige Abschnitte unterteilt wird.

## Revendications

1. Procédé et système d'alignement d'une pluralité d'éléments de maçonnerie en béton (34) lors de la construction d'une structure en béton sur une surface (20) à l'aide d'une substance qui permet de coller ensemble lesdits éléments de maçonnerie en béton (34), ledit procédé comprenant les étapes consistant en :
a. l'utilisation de ladite pluralité d'éléments de maçonnerie en béton (34) comprenant :
(i) un premier côté et un second côté (14) relié à une première extrémité et à une seconde extrémité (18) ;
(ii) un côté supérieur (22) et un côté inférieur (24) présentant une longueur et une largeur ;
(iii) une pluralité de rainures (32) sur ledit côté supérieur (22) et sur ledit côté inférieur (24), dans lesquels au moins deux de ladite pluralité de rainures (32) sont pratiquées parallèlement l'une de l'autre dans le sens de ladite longueur dudit côté supérieur et dans le sens de ladite longueur dudit côté inférieur ;
b. l'utilisation d'une pluralité d'écarteurs (36) dotés d'un organe plat (44), au moins un doigt horizontal (38) et au moins un doigt vertical (42) s'étendant vers le haut à partir dudit doigt horizontal ;
c. la mise en place de ladite pluralité d'éléments de maçonnerie en béton (34) sur ladite surface (20) ;
d. l'insertion dudit organe plat (44) de ladite pluralité d'écarteurs (36) dans ladite rainure (32) de manière que ledit doigt garantisse une distance définie à partir d'une seconde unité de maçonnerie en béton (34) ; et
e. l'empilement desdits éléments de maçonnerie en béton (34) de manière que lesdits écarteurs (36) permettent de garantir une distance définie entre lesdits éléments de maçonnerie en béton (34), dans lequel chaque écarteur (36) comporte une surface plate sur une surface parallèle à l'organe plat (44) et dans lequel ledit au moins un doigt horizontal (38) et ledit au moins un doigt vertical (4é) divisent l'organe plat (44) en sections, dans lesquels ladite au moins une forme horizontale (38) assure l'espacement dans un joint de lit (30), tandis que ledit au moins un doigt vertical (42) assure l'espacement dans un joint de tête (28), et dans lequel ledit organe plat (44) desdits espaceurs (36) est positionné dans ladite pluralité de rainures (32) de manière que ledit organe plat (44) vienne en contact avec ledit élément de maçonnerie en béton (34) à l'intérieur de ladite rainure (32), pour permettre à une pluralité desdits éléments de maçonnerie en béton (34) d'être assemblés pour former une structure avec les éléments espacées d'une distance prédéterminée aussi bien dans la direction verticale que dans la direction horizontale,
**caractérisés en ce qu'**au moins un écarteur de ladite pluralité d'écarteurs (36) comprend en outre un doigt horizontal (38) et un doit vertical (42), ledit doigt horizontal (38) passant au centre dudit organe plat (44) d'un seul côté de ce dernier et ledit doigt vertical (42) s'étendant vers le haut à partir du doigt horizontal (38), ledit organe plat (44) étant divisé en trois parties plates.

2. Procédé et système tel que défini selon la revendication 1, dans lesquels les rainures (32) sont formées, découpées ou entaillées au préalable dans ledit côté supérieur (22) et dans ledit côté inférieur (24) desdits éléments de maçonnerie en béton (34).

3. Procédé et système tel que défini selon la revendication 1 ou la revendication 2, dans lesquels ladite pluralité de rainures (32) s'étend à partir de ladite première extrémité (18) vers ladite seconde extrémité (18) desdits éléments de maçonnerie en béton (34).

4. Procédé et système tel que défini selon la revendication 1 ou la revendication 2, dans lesquels ladite pluralité de rainures (32) présente une profondeur uniforme et une largeur uniforme.

5. Procédé et système tel que défini selon la revendication 4, dans lesquels ledit au moins un doigt dudit écarteur (36) entre en contact avec ladite unité de maçonnerie en béton (34) à proximité de ladite rainure (32) afin de définir ladite distance définie entre ladite pluralité desdits éléments de maçonnerie en béton (34).

6. Procédé et système tel que défini selon la revendication 1 ou la revendication 2, dans lesquels au moins un autre écarteur de ladite pluralité des écarteurs (36) comprend en outre un doigt horizontal (38) s'étendant entièrement sur toute l'étendue d'une extrémité inférieure dudit organe plat (44).

7. Procédé et système tel que défini selon la revendication 1 ou la revendication 2, dans lesquels au moins un autre écarteur de ladite pluralité d'écarteurs (36) comprend en outre un doigt horizontal (38) et un doigt vertical (42) s'étendant sur toute l'étendue dudit élément plat (42) de manière que ledit élément plat (44) soit divisé en quatre parties plates.

8. Procédé et système tel que défini selon la revendication 1 ou la revendication 2, dans lesquels au moins un autre écarteur de ladite pluralité d'écarteurs (36) comprend en outre un doigt horizontal (38) et un doigt vertical (42), dans lesquels ledit doigt horizontal (38) s'étend entièrement sur toute l'étendue d'une extrémité inférieure dudit élément plat (44) et ledit doigt vertical (42) divise ledit élément plat (44) en deux parties plates.

9. Procédé et système tel que défini selon la revendication 1 ou 2, dans lesquels dans au moins un autre écarteur de ladite pluralité d'écarteurs, ledit au moins un doigt est un doigt horizontal (38) s'étendant sur toute l'étendue dudit élément plat (44) de manière que ledit élément plat (44) soit divisé en deux parties plates.
